# EUROPEAN PATENT APPLICATION

(11) **EP 2 889 219 A1**
(43) Date of publication of application: **01.07.2015**
(21) Application number: 14198689.3
(22) Date of filing: 17.12.2014
(51) Int. Cl.: B64D 31/04, F02D 11/02

(54) **Control panel integration into aircraft throttle control**

(30) Priority: 26.12.2013 US 201314141150
(71) Applicant: Honeywell International Inc., Morristown, NJ 07962-2245 (US)
(72) Inventor: Ott, Joseph, Morristown, NJ New Jersey 07962-2245 (US); Hughes, Keith, Morristown, NJ New Jersey 07962-2245 (US); De Mers, Robert E., Morristown, NJ New Jersey 07962-2245 (US); Olofinboba, Olukayode, Morristown, NJ New Jersey 07962-2245 (US)
(74) Representative: Houghton, Mark Phillip

(57) **Abstract**

A lever control system integrates taxi operation using an electric motor in an aircraft with speed control of a jet engine in the same aircraft. The lever control system provides a smooth transition between the electric motor system used for aircraft taxi operation, and a jet engine system used to fly the aircraft. The lever control system may include a reverse lockout mechanism to prevent unintended reverse taxi movement of the aircraft.

## Description

### BACKGROUND OF THE INVENTION

The present invention generally relates to throttle control systems for aircraft and more particularly, to a control panel integration into an aircraft throttle control. Electric taxi (e-taxi) systems may be developed for use on aircraft such that they can be maneuvered on the ground without running main engines of the aircraft. Motors may directly drive one or more landing wheels. With these systems, there is a need for an intuitive controller that may let a pilot or other operator control an aircraft's motion easily and safely. Required aircraft taxi motions may include forward, reverse, and pivoting. Determining a best location and configuration for a controller is important to maintaining safe taxi operation.

As can be seen, there is a need for a control panel integration into an aircraft throttle system.

### SUMMARY

In one aspect of the invention, a lever control system of an aircraft, comprises a lever, wherein the lever is configured to set a taxi speed of the aircraft on a runway using an electric motor system affixed to the aircraft undercarriage with a jet engine system affixed to the aircraft turned off, wherein the lever is also configured to control a throttle of the jet engine system with the jet engine system affixed to the aircraft turned on, and the electric motor system turned off.

In another aspect of the invention, A lever control system of an aircraft, comprises a first lever, wherein the first lever is configured to set a taxi speed of the aircraft on a runway using an electric motor system affixed to the aircraft with a jet engine system affixed to the aircraft turned off, wherein the first lever is also configured to control a throttle of the jet engine system with the jet engine system affixed to the aircraft turned on, and the electric motor system turned off; a second lever, wherein the second lever is configured to set engine thrust levels for the jet engine system; and a reverse lockout mechanism affixed below the first lever and configured to prevent reverse taxi motion in the aircraft.

In another aspect of the invention, a system for lever control of an aircraft, comprises a lever, wherein the lever is configured to set a taxi speed of the aircraft on a runway using an electric motor system affixed to the aircraft with a jet engine system of the aircraft turned off; a knob coupled to the lever configured to rotate about the lever from a first position into a second position, and wherein the lever is configured to change a configuration of the lever in response to movement of the knob from the first position to the second position.

These and other features, aspects and advantages of the present invention will become better understood with reference to the following drawings, description and claims.

### BRIEF DESCRIPTION OF THE DRAWINGS

Fig. 1 illustrates a front view of a lever control mechanism including a throttle lever for e-taxi control with a reverse lockout feature;
Fig. 2 illustrates a side view of the lever control mechanism of Fig. 1;
Fig. 3 illustrates a front view of an embodiment of the invention with a throttle/etaxi switch.
Fig. 4 illustrates a front view of a throttle lever for e-taxi control from Figure 3;
Fig. 5 illustrates a front view of a throttle lever for e-taxi control from Figure 3 shown with a different shape configuration from Figure 4; and
Fig. 6 illustrates a front view of the throttle lever for e-taxi control from Figure 3 shown in a different shape configuration from Figures 4 and 5.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features. However, any single inventive feature may not address any of the problems discussed above or may only address one of the problems discussed above. Further, one or more of the problems discussed above may not be fully addressed by any of the features described below.

Broadly, an embodiment of the present invention generally provides a throttle control system for aircraft.

More specifically, the present invention may integrate an electric taxi controller into an aircraft's existing throttle control system for the aircraft that includes an electric motor system for aircraft taxi operations and a jet engine system for flight operations of the aircraft.

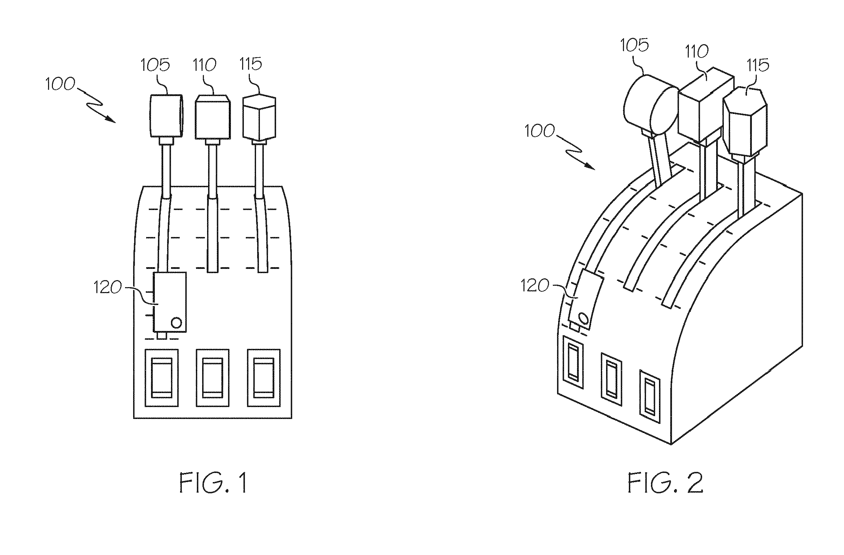

Fig. 1 and Fig. 2 illustrate a lever control system 100 with a reverse lockout feature. In an exemplary embodiment, the lever control mechanism 100 may include an electric taxi (e-taxi) control lever 105 and throttle levers 110 and 115. The e-taxi control lever 105 may be configured to set a specific taxi speed of the aircraft on a runway using an electric motor system affixed to the aircraft with a jet engine system affixed to the aircraft turned off. For example, the aircraft may be set to a specific taxi speed such as, 5 knots or 10 knots using the electric motor system with the jet engine system to the aircraft turned off. The throttle levers 110 and 115 may be configured to control a throttle of a jet engine system. Co-locating throttle levers 110 and 115 with the e-taxi control lever 105 may by a convenient location for a pilot to reach for controls that effect longitudinal motion of the aircraft. The e-taxi control lever 105 may include a reverse lockout mechanism 120. The reverse lockout mechanism 120 may prevent the pilot from inadvertently commanding a reverse speed during forward motion or other situations where it would not be safe to send the system a reverse command. Rotating the reverse lockout mechanism 120 out of the way provides a clear signal that the pilot is aware of the consequences of this command. Rotating the lockout frees the lever to be moved into a position that would command a reverse speed. E-taxi operation of the aircraft may allow the aircraft to taxi on the aircraft runway using only the electric motor system with the jet engine system turned off and minimizing the use of aircraft brakes. The throttle levers 110 and 115 may control speed of the aircraft after the aircraft has finished taxiing, and is ready to fly into the air. In an embodiment, the jet engine system may be replaced with a turboprop or turbofan system.

In an embodiment, the reverse lockout mechanism 120 may be removable. If the reverse lockout mechanism is removed, the first lever 105 may have a range of motion that is extended so that the aircraft may set a negative speed, that is, the aircraft may set a specific reverse speed using the electric motor and with the jet engines stopped.

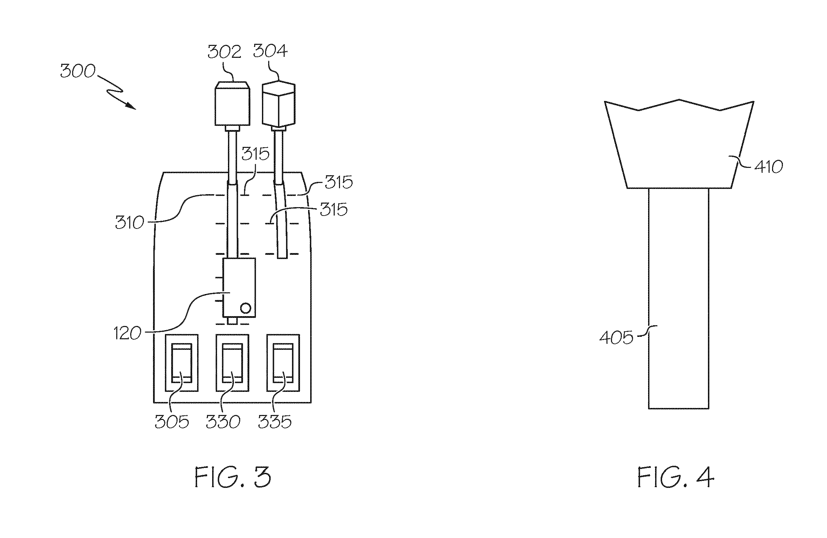

Fig. 3 illustrates a front view of an embodiment of the lever control system 300 with a throttle/e-taxi switch 305. Referring to Figs. 1-3, the lever control system 300 may include two levers 302 and 304. In an exemplary embodiment, the lever control system may also include only one lever 302 that may be switched for e-taxi use. The first lever 302 may perform engine thrust control and also e-taxi speed control. The second lever 304 may set engine thrust levels and control a throttle of the jet engines of the aircraft. In an embodiment, the first lever 302 may be configured to set a specific taxi speed for the aircraft on a runway or taxiway using an electric motor system affixed to an undercarriage of the aircraft with a jet engine system affixed to the aircraft turned off. The first lever 302 and second lever 304 may have two scales (310 and 315) associated with them. A first scale 310 for the first lever 302 may include units for a speed of the aircraft using e-taxi control for use with the jet engine system (not shown) turned off. For example, the units may be -5 knots, 0 knots, 5 knots, 10 knots, 15 knots, and 20 knots. A second scale 315 for the first lever 302 and the second lever 304 may represent units associated with jet engine thrust. The second scale 315 may be placed between the first lever 302 and the second lever 304, and on both sides of the second lever 304.

In an embodiment, the first scale 310 may be located adjacent to the first lever 302. The second scale 315 may be printed adjacent to the first lever 302 and adjacent to the second lever 304. In an embodiment, the first scale 310, and the second scale 315 may light up while in operation. In an embodiment, the second scale 315 may show increasing engine thrust. In an embodiment the first scale 310 and the second scale 315 may be displayed electronically. Both the first scale 310 and the second scale 315 may be shown on the same display, swapping graphics as needed. There may not need to be a separate display for each. An electronically displayed first scale 310 may be turned off during engine thrust. An electronically displayed second scale 315 showing throttle marking may be turned off during electric motor e-taxi operation.

Under jet engine operation, or under operation of other systems such as turboprop or turbofan, the first lever 302 and the second lever 304 may work the same, and may have the same amount of travel. In an embodiment, there may be only the first lever 302 without the second lever 304, even if the aircraft has multiple engines. The second lever 304 may be configured to control a throttle of the jet engine system. With the aircraft engines off, and e-taxi powered up, the first lever 302 may control e-taxi speed. The reverse lockout mechanism 120 affixed below the first lever 302 may prevent inadvertent reverse taxi motion commands and therefore may prevent reverse taxi motion of the aircraft. The reverse lockout mechanism 120 may be removed. Moving the reverse lockout mechanism 120 out of the way may enable an extended range of motion of the first lever 302 and may allow a pilot to command a specific reverse speed for the aircraft using only the electric motor with the jet engines stopped.

A separate throttle/e-taxi system control switch 305 may designate which system is engaged and controlled by the lever control system 300, the jet engine, or the electric motor for e-taxi. The throttle/e-taxi switch 305 may have a switch guard that needs to be lifted in order to activate it. This requirement of lifting the switch guard may provide further safety to prevent inadvertent switching from using the electric motors of the aircraft to taxi, to using the jet engines for flight. Changing the lever control system 300 from electric motor to jet engine control may be indicated in an alert to a pilot. This alert may be, for example, a non-intrusive alert. In an embodiment, the alert may be conveyed to the pilot in multiple simultaneous ways including auditory, visual, and tactile signals to the pilot. In an embodiment, aircraft automation may sense conditions such as weight on wheels, an engine on or off condition, and the aircraft automation may automatically enable or disable e-taxi control. Additional switches 330 and 335 may be used for control operation such as lever shape change explained below. In an embodiment, the first lever 302 may be used to control both e-taxi and jet engine control with the second lever 304 unused.

In an exemplary embodiment, a pilot may power up the aircraft. After completing all preflight operations, and receiving departure clearances, the pilot may select TAXI mode for the throttle levers to perform an e-taxi. A change alert may be conveyed, and a speed indicator on a flight display may change to indicate ground speeds rather than airspeeds. The selected speed may be shown on the flight display as a target speed. When the aircraft is located at the end of the runway, the pilot may bring the aircraft to a stop. The pilot may change the aircraft configuration using the throttle/e-taxi switch 305 from TAXI mode to ENGINE mode to change from using the electric motor for taxiing the aircraft, to using the jet engines to fly the aircraft, and the lever control system 300 may announce the change in control in an auditory, visual, and/or tactile manner. The jet engines may start and the aircraft may take off. On landing, the above sequence may be reversed.

Figs. 4-6 illustrate throttle handle reconfigurations according to an exemplary embodiment of the invention. Referring to Figures 1-6, when using a lever 105, 110, 115, 302 or 304 for e-taxi control, changing a shape configuration of a handle 405 of one or all of the levers 105, 110, 115, 302, and 304 may act as a visual and tactile cue that the behavior and function of the lever 105, 110, 115, 302, or 304 has changed. This configuration change may also act as a switch that may cause the lever control system 100 to turn on control of the electric motor system to control taxi speed in response to the configuration change in the lever 105, 110, 115, 302, or 304. This configuration change may cause the aircraft to use the electric motor to e-taxi rather than the jet engine. This configuration change may include a turn of a knob 410 coupled to the handle 405.

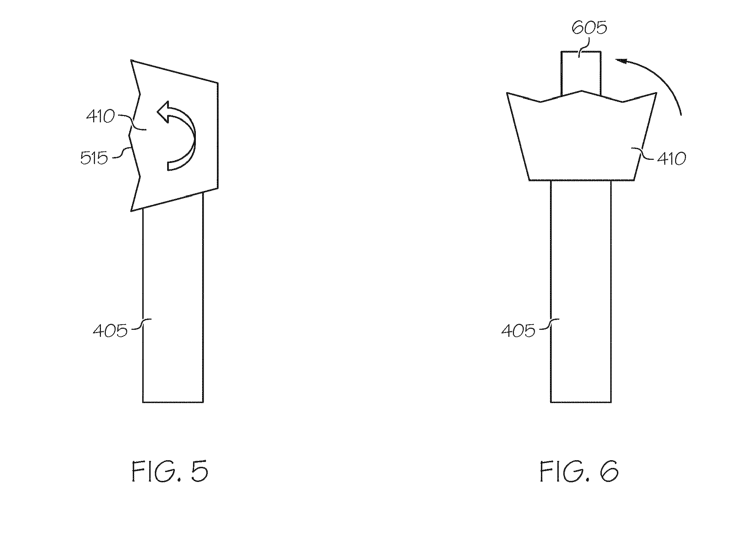

In another embodiment, pressing a recessed switch 330 or 335 (Fig. 3) may cause a dynamic configuration change to the levers 105, 110, 115, 302 or 304. In an embodiment, pressing the switch 330 or 335 may cause a change in function of the levers 105, 110, 115, 302, and 304. The levers 105, 110, 115, 302 and 304 may individually change configuration or may simultaneously change configuration. The knob 410 may incorporate a light source 605 that may indicate the change in function in response to a turning of the knob 410. In an embodiment, the light source 605 may protrude above a surface of the knob 410. Turning the knob 410 may change a function of a lever 105, 110, 115, 302, or 304. For example, turning the knob 410 may cause one of the levers 105, 110, 115, 302 and 304 to have detents at several positions, such as 0, 5, 10, 15, and 20 knots. In another example, turning the knob 410 from a first position to a second position may cause a configuration change of the throttle lever 110 to change from controlling e-taxi of the aircraft to controlling jet engine thrust for the aircraft. In an embodiment, as shown in Fig. 5, the configuration change may include the knob 410 being configured to pivot so that a top 515 of the knob 410 rotates about a lever 105, 110, 115, 302, or 304 from a first position to a second position along the handle's axis and faces orthogonally from the handle 405. In a further embodiment, as shown in Fig. 6, the knob 410 may be configured to slide down from the end along the length of the handle 405 to another point from the knob's 410 default position.

It should be understood, of course, that the foregoing relates to exemplary embodiments of the invention and that modifications may be made without departing from the spirit and scope of the invention as set forth in the following claims.

## Claims

1. A lever control system (100) of an aircraft, comprising:
a lever (302), wherein the lever (302) is configured to set a taxi speed of the aircraft on a runway using an electric motor system affixed to the aircraft undercarriage with a jet engine system affixed to the aircraft turned off,
wherein the lever (302) is also configured to control a throttle of the jet engine system with the jet engine system affixed to the aircraft turned on, and the electric motor system turned off.

2. The system (100) of claim 1, including a reverse lockout mechanism (120) affixed below the lever (302) configured to prevent reverse taxi motion in the aircraft.

3. The system (100) of claim 2, wherein the reverse lockout mechanism (120) is configured to be removable.

4. The system (100) of claim 3, wherein in response to a removal of the reverse lockout mechanism (120), the lever (302) is configured with an extended range of motion and is configured to set a specific reverse taxi speed for the aircraft using the electric motor system of the aircraft with the jet engine system turned off.

5. The system (100) of any one of claims 1-5, including a system control switch (305) that is configured to control whether the lever control system (100) uses the electric motor system or the jet engine system.

6. The system (100) of any one of claims 1-6, wherein a side of the first lever (302) is configured to indicate units for aircraft taxi speed control using the electric motor system with the jet engine system turned off.
